# NEW EUROPEAN PATENT SPECIFICATION

(11) **EP 2 367 739 B2**
(45) Date of publication and mention of the opposition decision: **22.02.2017**
(45) Mention of the grant of the patent: 23.04.2014
(21) Application number: 09796120.5
(22) Date of filing: 30.12.2009
(51) Int. Cl.: B65D 85/804, A47J 31/06

(54) **BEVERAGE PREPARATION**
GETRÄNKEZUBEREITUNG
PRÉPARATION DE BOISSON

(30) Priority: 17.06.2009 EP 09162895; 17.06.2009 EP 09162914; 17.06.2009 EP 09162931; 19.06.2009 EP 09163310; 13.08.2009 EP 09167851; 17.09.2009 EP 09170590
(43) Date of publication of application: 28.09.2011
(73) Proprietor: Koninklijke Douwe Egberts B.V., 3532 AD Utrecht (NL)
(72) Inventor: KAMERBEEK, Ralf, NL-3454 EJ De Meern (NL); FLAMAND, John Henri, NL-6741 HP Lunteren (NL); POST VAN LOON, Angenita Dorothea, NL-3544 DT Utrecht (NL); KOELING, Hendrik Cornelis, NL-3826 BE Amersfoort (NL)
(74) Representative: V.O.
(86) International application number: PCT/NL2009/050827
(87) International publication number: WO 2010/137957

(56) References cited:
- EP-A- 1 839 543
- EP-A- 1 864 917
- EP-A1- 1 849 715
- EP-B1- 1 847 481
- WO-A-2006/043106
- WO-A1-2008/058303
- WO-A1-2008/116818
- NL-C2- 2 000 247
- US-A- 5 776 527
- WACK H. ET AL: 'Water-Swellable Materials-Application in Self-Healing Sealing Systems' PROCEEDINGS OF THE FIRST INTERNATIONAL CONFERENCE ON SELF HEALING MATERIALS April 2007, pages 1 - 9
- PERVEZ T. ET AL: 'Effect of exposure on material response of a swelling elastomer' ARCHIVES OF MATERIALS SCIENCE AND ENGINEERING vol. 37, no. 2, June 2009, pages 77 - 84

## Description

The present invention relates generally to beverage preparation.

Beverage preparation systems are known in which a capsule containing beverage ingredients, such as ground coffee, is introduced into a beverage preparation device and supplied with hot water under pressure that enters the capsule in order to interact with the beverage ingredients and produce a beverage that exits the capsule. Commonly, the beverage preparation device comprises an enclosing member for enclosing the capsule. In order to prevent leakage of the liquid or the beverage, there exist various prior art solutions for providing a sealing contact between the enclosing member and the capsule. Some known solutions are disclosed in EP1816934, EP1654966, EP1700548, EP1929904, and EP1839543.

WO 2006/043108 discloses a pod for preparing a beverage comprising a partition 20, cup 29 and dispersion plate that may be made from starchedbased polymers.

The present invention presents a further alternative solution.

According to a first aspect, the present invention may provide a beverage preparation system comprising a capsule for containing a beverage ingredient and a beverage preparation device comprising an enclosing member for enclosing the capsule, the system being operable such that a liquid under pressure enters the capsule in order to interact with the beverage ingredients and produce a beverage that exits the capsule, wherein a wall of the capsule includes a material which, upon being wettened, expands such that a sealing contact between the capsule and the enclosing member is formed or reinforced. Since the sealing contact is formed or reinforced through expansion, the wall of the capsule may be thin and comprise a biodegradable material, such as, for example, a starch. Said material may also comprise a cardboard and/or gel which, upon being wettened, expands.

Preferably, the material swells as result of absorbing the liquid or beverage.

Further aspects and preferred features of the present invention are described in the following description and defined in the appended claims. Exemplary embodiments of the present invention are hereinafter described with reference to the accompanying drawings, in which:
Figure 1 shows a schematic cross-sectional view of a first beverage preparation system; and
Figure 2 shows a schematic cross-sectional view of a second beverage preparation system.

Where similar parts exist in more than one illustrated embodiment, the same reference numerals have been used throughout.

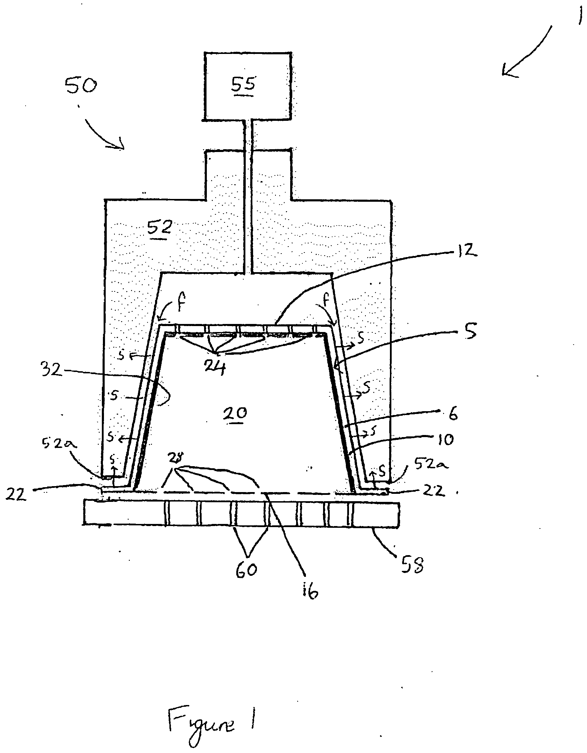

A first beverage preparation system is shown in Figure 1 and generally designated 1. The system 1 comprises a disposable capsule 5 for containing beverages, such as ground coffee, and a beverage preparation device 50. The beverage preparation device 50 comprises a receptacle or enclosing member 52 for enclosing the capsule 5. The device 50 further comprises a liquid dispensing device 55 for supplying a predetermined amount of hot water under pressure to the capsule 5. The device 50 further comprises a support member 58 for supporting the enclosing member 52 and the capsule 2. The support member 58 comprises though-channels 60 via which prepared beverage drains.

The capsule 5 comprises a cup 6 made from a biodegradable, starch-based material which, on contact with liquid, absorbs it, and swells. The cup 6 comprises a circumferential wall 10, a bottom 12 closing the circumferential wall 10 at a first end 14, a flange-like rim 22 extending outwardly from the circumferential wall 10 at a second end 18 opposite the bottom 12. The capsule 5 further comprises a lid 16 formed from a polymeric film closing the circumferential wall 10 at the second end 18. The circumferential wall 10 and the bottom 12 of the cup 6, and the lid 16 define an enclosed inner space 20 within which ground coffee is contained. The capsule 5 comprises a plurality of entrance openings in the form of pre-made holes 24 in the bottom 12. The capsule 5 further comprises a plurality of exit openings in the form of pre-made holes 28 formed in the lid 16. The capsule 5 further comprises a coating 32 that is impermeable to water (and thus any beverage) on the inside surfaces of the cup 6. The capsule 5 contains an amount of ground coffee sufficient to prepare a single serving of the beverage, for example, a single cup of coffee, i.e. 30 - 200 ml of coffee beverage.

In other embodiments, the coating 32 is replaced by a plastic or aluminium foil that is impermeable to water. In other embodiments, the bottom 12 is formed from a polymeric film. In still further embodiments, the bottom 12 and/or the lid 16 comprise a sheet of filtering paper.

The enclosing member 52 has a shape complementary to that of the capsule 5. In Figure 1, a gap is shown between the circumferential wall 10 and the enclosing member 52. This gap is shown only for the purposes of illustration; in practice, the capsule 5 is sized so as to fit snugly within the enclosing member 52 such that the circumferential wall 10 is in abutting or near-abutting relation with the enclosing member 106. Similarly, the gaps between the leading face 52a of the enclosing member 52 and the rim 22, and between the support member 58 and the rim 22 are only shown for the purposes of illustration; in practice, the rim 22 is clamped between the leading face 52a and the support member 58.

In this position, before the beverage preparation begins, there is little or no sealing effect between the circumferential wall 10 and the enclosing member 52. Due to the above-mentioned clamping, a seal is formed between the leading face 52a of the enclosing member 52 and the rim 22. In operation, the dispensing device 55 supplies hot water at a pressure of 9 bars into the enclosing member 52. The hot water enters the capsule 5 through the holes 24 where it interacts with the ground coffee to form a coffee beverage which drains from the capsule 5 via the holes 28. Because of the coating 32, inside the capsule 5 the cup material is not exposed to any water or coffee beverage. The coffee beverage then flows via through-channels 60 and collected for subsequent consumption. The hot water flows between the circumferential wall 10 and the enclosure member 52 as indicated by the arrows f. As it flows, it is absorbed by the material on the outside surface of the circumferential wall 10 causing swelling of the material as indicated by the arrows S. The swelling establishes a sealing contact between the circumferential wall 10 and the enclosure member 52 along the length of the cup 6. Should any water manage to reach as far the rim 22, it wettens the material of the rim 22 causing it to swell, thereby reinforcing the seal that already exists there.

It will be appreciated that, in this embodiment, the properties of the material from which the cup is made are exploited so as (i) to create an additional circumferential seal along the length of the cup 6, and (ii) to make the seal that exists at the rim 22 self-reinforcing.

In other embodiments, the dimensions of the cup 6 may not be so closely matched to the enclosing member 52, whereby no additional seal along the length of the cup 6 is able to form, the required sealing then being provided only by the self-reinforcing seal at the rim 22.

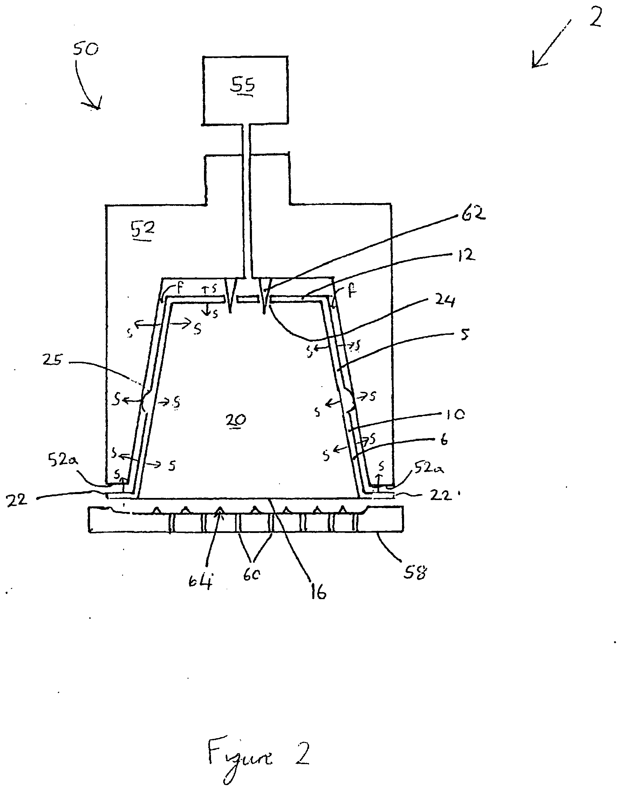

A second beverage preparation system 2 is shown in Figure 2. The capsule 5 in this system 2 differs from that of the system 1 in that both bottom 12 and the lid 16 lack pre-made holes 24, 28. Further, the capsule 5 lacks any layer on its inside surface that is impermeable to water. Further, the circumferential wall 10 further comprises partway along its length an annular ridge 25.

The beverage preparation device 50 in this system 2 differs from that of the system 1 in that the device 50 further comprises bottom piercing means 62. The bottom piercing means 62 comprises spikes projecting from an internal surface of the enclosing member 52 which as the capsule 5 is enclosed by the enclosing member 52 pierce the bottom 12 of the cup 6. Further, the device 50 further comprises a lid piercing means 64 comprising plurality of spikes for piercing the lid 16 during preparation of the beverage.

In operation, the capsule 5 is initially enclosed by the enclosing member 52. As the enclosure operation is completed the bottom piercing means 62 pierces the bottom 12 of the cup 6 creating a plurality of the holes 24. In Figure 2, gaps between the leading face 52a of the enclosing member 52 and the rim 22, and between the support member 58 and the rim 22 are only shown for the purposes of illustration; in practice, the rim 22 is clamped between the leading face 52a and the support member 58. Next, when the dispensing device 55 supplies hot water into the enclosing member 52, the hot water passes through the newly-formed holes 24 into the capsule 5 where it interacts with the ground coffee to form a coffee beverage. As the water is supplied, the pressure inside the capsule 5 rises. This rise in pressure causes the polymeric film lid 16 to deform, causing it progressively to bow outwardly and be pressed against the lid piercing means 64. Once the pressure reaches a certain level, the tear strength of the lid 16 is exceeded and the lid 16 ruptures creating exit openings through which the coffee beverage drains. The coffee beverage then flows via through-channels 60 and collected for subsequent consumption. The hot water also flows between the circumferential wall 10 and the enclosure member 52 as indicated by the arrow f. The material of the cup 6 absorbs hot water/beverage via its inner surface and hot water via its outer surface resulting in a general swelling of the cup material as indicated by the arrows S and the formation of a seal between the ridge 25 and the enclosure member 52. Should any water manage to reach as far as the rim 20, it wettens the material of the rim causing it to swell, thereby reinforcing the seal that already exists there.

It will be appreciated that, in this embodiment, the properties of the material from which the cup is made are exploited so as (i) to create an additional circumferential seal local to the annular ridge 25, and (ii) to make the seal that exists at the rim 22 self-reinforcing.

In other embodiments, the rim 22 of the capsule 5 is not clamped between the enclosing member 52 and the support member 58, and the system relies solely on the seal formed between the annular ridge 25 and the enclosing member 52.

In the first and second beverage systems 1, 2, the lid 16 may comprise the same starch-based material as that from which the cup 6 is made. In the exemplary embodiments of the present invention, the sealing effect is formed or reinforced solely by means of the physical expansion of the material resulting from its swelling due to liquid absorption. Therefore, in the exemplary embodiments of the present invention, the material, need not be, and is: not resiliently deflectable, not rubber elastic, not hollow, not compressibly resilient, not plastically deformable and/or not plastically deformable under fluid pressure. Since none of these characteristics are required, the capsule 5 may be a thin-walled structure made from a biodegradable material. In some embodiments, the elevated temperature of the water may promote expansion of the material by catalyzing the absorption of the liquid or otherwise.

## Claims

1. A beverage preparation system (1) comprising a capsule (5) for containing a beverage ingredient and a beverage preparation device (50) comprising an enclosing member (52) for enclosing the capsule, the system being operable such that a liquid under pressure enters the capsule in order to interact with the beverage ingredients and produce a beverage that exits the capsule, **characterized in that** a wall (10, 12, 16) of the capsule includes a material which, upon being wettened, expands such that a sealing contact between the capsule and the enclosing member is formed or reinforced.

2. A system (1) as in claim 1, wherein said material comprises a biodegradable material.

3. A system (1) as in any preceding claim, wherein said material comprises a starch.

4. A system (1) as in any preceding claim, wherein said material comprises a cardboard and/or gel which, upon being wettened, expands.

5. A system (1) as in any preceding claim, wherein said material swells as result of absorbing the liquid or beverage.

6. A system (1) as in any preceding claim, wherein the capsule comprises a cup (6) comprising a perimeter wall (10), and a bottom (12) at a first end (14) of the perimeter wall, and a lid (16) at a second end (18) of the perimeter wall.

7. A system (1) as in claim 6, wherein the cup (6) comprises a flange-like rim (22) extending outwardly from the second end of the perimeter wall.

8. A system (1) as in claims 6 or 7, wherein the cup (6) is made from said material.

9. A system (1) as in claim 8, wherein a said sealing contact is formed or reinforced between the rim (22) and the enclosing member (52).

10. A system (1) as in claims 8 or 9, wherein a said sealing contact is formed or reinforced between the perimeter wall (10) and the enclosing member (52).

11. A system (1) as in claim 10, wherein the cup (6) further comprises a ridge (25) extending around the perimeter wall (10) that forms or reinforces the said sealing contact with the enclosing member (52).

12. A system (1) as in any of claims 1 to 11, wherein the lid (16) is made from said material.

13. A system (1) as in any of claims 1 to 12, further comprising a water-impermeable layer (32) on the inside surface of the cup (6).

## Patentansprüche

1. Getränkzubereitungssystem (1), umfassend eine Kapsel (5) zum Aufnehmen einer Getränkzutat und einer Getränkzubereitungsvorrichtung (50) mit einem umschließenden Element (52) zum Umschließen der Kapsel, wobei das System so betrieben wird, dass eine Flüssigkeit unter Druck in die Kapsel eintritt, um mit den Getränkezutaten zusammenzuwirken und ein Getränk zuzubereiten, welches die Kapsel verlässt, **dadurch gekennzeichnet, dass** eine Wand (10, 12, 16) der Kapsel ein Material enthält, das sich beim Befeuchten so ausdehnt, dass ein dichtender Kontakt zwischen der Kapsel und dem umschließenden Element gebildet oder verstärkt wird.

2. System (1) nach Anspruch 1, wobei das Material ein biologisch abbaubares Material umfasst.

3. System (1) nach einem der vorhergehenden Ansprüche, wobei das Material eine Stärke umfasst.

4. System (1) nach einem der vorhergehenden Ansprüche, wobei das Material einen Karton und/oder ein Gel umfasst, der/das sich beim Befeuchten ausdehnt.

5. System (1) nach einem der vorhergehenden Ansprüche, wobei das Material infolge der Absorption der Flüssigkeit oder des Getränks anschwillt.

6. System (1) nach einem der vorhergehenden Ansprüche, wobei die Kapsel eine Tasse (6) mit einer Umfangwand (10) und einem Boden (12) an einem ersten Ende (14) der Umfangwand und einem Deckel (16) an einem zweiten Ende (18) der Umfangwand umfasst.

7. System (1) nach Anspruch 6, wobei die Tasse (6) einen flanschähnlichen Rand (22) aufweist, der sich von dem zweiten Ende der Umfangwand nach außen erstreckt.

8. System (1) nach den Anspruch 6 oder 7, wobei die Tasse (6) aus dem Material hergestellt ist.

9. System (1) nach Anspruch 8, wobei ein dichtender Kontakt zwischen dem Rand (22) und dem umschließenden Element (52) gebildet oder verstärkt wird.

10. System (1) nach Anspruch 8 oder 9, wobei ein dichtender Kontakt zwischen der Umfangwand (10) und dem umschließenden Element (52) gebildet oder verstärkt wird.

11. System (1) nach Anspruch 10, wobei die Tasse (6) ferner eine um die Umfangwand (10) verlaufende Kante (25) umfasst, welche den dichtenden Kontakt mit dem umschließenden Element (52) bildet oder verstärkt.

12. System (1) nach einem der Ansprüche 1 bis 11, wobei der Deckel (16) aus dem Material hergestellt ist.

13. System (1) nach einem der Ansprüche 1 bis 12, ferner umfassend eine wasserundurchlässige Schicht (32) auf der Innenfläche der Tasse (6).

## Revendications

1. Système de préparation de boisson (1) comprenant une capsule (5) pour contenir un ingrédient de boisson et un dispositif de préparation de boisson (50) comprenant un élément formant enceinte (52) pour entourer la capsule, le système pouvant être actionné de sorte qu'un liquide sous pression pénètre dans la capsule afin d'interagir avec les ingrédients de boisson et produire une boisson qui sort de la capsule, **caractérisé en ce qu'**une paroi (10, 12, 16) de la capsule comprend un matériau qui, après avoir été mouillé, se dilate de sorte qu'un contact d'étanchéité entre la capsule et l'élément formant enceinte est formé ou renforcé.

2. Système (1) selon la revendication 1, dans lequel ledit matériau comprend un matériau biodégradable.

3. Système (1) selon l'une quelconque des revendications précédentes, dans lequel ledit matériau comprend un amidon.

4. Système (1) selon l'une quelconque des revendications précédentes, dans lequel ledit matériau comprend un carton et/ou du gel qui, après avoir été mouillé, se dilate.

5. Système (1) selon l'une quelconque des revendications précédentes, dans lequel ledit matériau se gonfle suite à l'absorption du liquide ou de la boisson.

6. Système (1) selon l'une quelconque des revendications précédentes, dans lequel la capsule comprend une coupelle (6) comprenant une paroi périmétrale (10) et un fond (12) au niveau d'une première extrémité (14) de la paroi périmétrale, et un couvercle (16) au niveau d'une seconde extrémité (18) de la paroi périmétrale.

7. Système (1) selon la revendication 6, dans lequel la coupelle (6) comprend un rebord en forme de collerette (22) s'étendant vers l'extérieur à partir de la seconde extrémité de la paroi périmétrale.

8. Système (1) selon les revendications 6 ou 7, dans lequel la coupelle (6) est réalisée à partir dudit matériau.

9. Système (1) selon la revendication 8, dans lequel ledit contact d'étanchéité est formé ou renforcé entre le rebord (22) et l'élément formant enceinte (52).

10. Système (1) selon les revendications 8 ou 9, dans lequel ledit contact d'étanchéité est formé ou renforcé entre la paroi périmétrale (10) et l'élément formant enceinte (52).

11. Système (1) selon la revendication 10, dans lequel la coupelle (6) comprend en outre une crête (25) s'étendant autour de la paroi périmétrale (10) qui forme ou renforce ledit contact d'étanchéité avec l'élément formant enceinte (52).

12. Système (1) selon l'une quelconque des revendications 1 à 11, dans lequel le couvercle (16) est réalisé à partir dudit matériau.

13. Système (1) selon l'une quelconque des revendications 1 à 12, comprenant en outre une couche imperméable à l'eau (32) sur la surface intérieure de la coupelle (6).
